(19) Europäisches Patentamt

European Patent Office

Office européen des brevets

(11) **EP 1 419 034 B1**

(12) **EUROPEAN PATENT SPECIFICATION**

(45) Date of publication and mention
of the grant of the patent:
**19.07.2006 Bulletin 2006/29**

(51) Int Cl.:
***B25B 11/00*** *(2006.01)*

(86) International application number:
**PCT/EP2002/003661**

(21) Application number: **02727518.9**

(22) Date of filing: **03.04.2002**

(87) International publication number:
**WO 2003/009972 (06.02.2003 Gazette 2003/06)**

(54) **MAGNETIC CLAMPING DEVICE AND METHOD FOR DETECTING AND CONTROLLING AN OPERATING STATE OF A MAGNETIC CLAMPING DEVICE**

MAGNETISCHE KLEMMEINRICHTUNG UND VERFAHREN ZUM ERMITTELN UND STEUERN DES BETRIEBSZUSTANDES EINER MAGNETISCHEN KLEMMEINRICHTUNG

DISPOSITIF DE SERRAGE MAGNETIQUE ET PROCEDE PERMETTANT DE DETECTER ET DE COMMANDER UN ETAT DE FONCTIONNEMENT D'UN DISPOSITIF DE SERRAGE MAGNETIQUE

(84) Designated Contracting States:
**DE ES FR GB IT TR**

(30) Priority: **26.07.2001 US 916009**

(43) Date of publication of application:
**19.05.2004 Bulletin 2004/21**

(73) Proprietor: **STÄUBLI FAVERGES**
**74210 Faverges (FR)**

(72) Inventors:
• **JOHNSON, Mark, Adrian**
**Sheffield S6 1WF (GB)**

• **BARTON, Simon, Charles**
**Raleigh, NC 27614 (US)**

(74) Representative: **Myon, Gérard Jean-Pierre**
**Cabinet Lavoix,**
**62, rue de Bonnel**
**69448 Lyon Cédex 03 (FR)**

(56) References cited:
**EP-A- 0 544 903        EP-A- 0 669 198**
**US-A- 4 237 455        US-A- 6 104 270**

## Description

The present invention relates to a magnetic clamping system and a method for detecting and controlling an operating state of a magnetic clamping device defined in the preambles of independent claims 1 and 18. Such a system or method is e.g. know from document US 6 104 270. In general, clamping devices are necessary in a wide variety of material handling and manufacturing machines, such as (industrial) robots, manipulators or injection molding machines, e.g. for (releasably) attaching tools (such as welding guns or holding chucks) or workpieces to robotic arms of robots at assembly lines in the automobile industry or of an injection mold to a mold platen.

Material handling and manufacturing machines, such as robots, manipulators or injection molding machines, are generally provided with various sensing means for assuring that mechanically and hydraulically based coupling mechanisms are properly engaged for operation thereof to continue. In order to minimize down time (e.g. for changing of the tool of the robot) and maximize productivity of these kinds of machines, recently magnetic coupling mechanisms have been increasingly used e.g. as quick mold change devices for injection molding machines.

In the following the known magnetic coupling devices, which are also called chucks, are exemplified with relation to such quick mold change devices for injection molding machines. The magnetic based quick mold change devices, unlike the mechanical and hydraulic coupling mechanisms, normally do not require extensive modifications to the mold and lend themselves to magnetic clamping with minimal structural modification inasmuch as they may be readily directly coupled with the flat steel bases customarily used for injection molds. Additionally, magnetic based quick mold change devices have greater clamping accuracy, improved safety, ready accessibility, and low maintenance and low energy consumption. Moreover, the magnetic based quick mold change devices in general do not use redundant coupling mechanisms, but rely solely on the clamping force generated by magnetization for maintaining the mold in accurate and functional position.

The quoted clamping force for these magnetic clamping devices assumes the workpiece (for example the back-plate of a mold) is made of mild steel and has adequate thickness and good surface finish. However, in practice there are a number of factors that may adversely affect the clamping force. For example the workpiece may be made from a material with inferior magnetic properties, or it may be warped or covered in dirt or rust. Furthermore the clamping force may be reduced by a foreign body being trapped between the chuck and the workpiece at the time of clamping. Additionally, even though under normal operating conditions, the generated magnetic clamping forces are ample to hold the mold on the mold platen, certain operating conditions can arise wherein large forces may transiently occur that have the potential to dislodge the mold. Over-packing the mold or incorrect ejector stroke adjustment, for example, can create a force that exceeds the magnetic clamping force causing the mold to be released and fall to the bed of the machine.

The same problems occur with the device known from EP-A-0 544 903. All of the foregoing problems can reduce the applied clamping force of the magnetic coupling mechanisms. Currently known sensors in magnetic clamping devices are current sensors and proximity switches. However, current sensors merely detect problems with electrical supply and existing proximity probes only detect the physical presence of the mold. Additionally, neither of same sensors fully takes into account the magnetic performance of the poles of the magnetic coupling mechanisms in contact with the mold. Thus, when the described operating conditions occur these types of sensors do not provide adequate provisions for detecting same.

The described proximity sensors e.g. have been incorporated into the magnetic coupler. In operation, as long as the mold is in contact with the magnetic chuck, the proximity sensors are closed, and operating conditions are maintained. In the event the mold separates a predetermined distance from the magnetic chuck; generally 0.2 mm or more, the proximity sensors open and an emergency stop condition is initiated at the machine. Such sensing parameters are not altogether adequate inasmuch as this threshold distance reduces the clamping force significantly and the mold will have already dislodged from its base prior to sensor signal. A further problem can be introduced by the initial mounting of the mold. Therein, dependent on the particular control system, the proximity sensors prevent magnetization unless the mold is positioned within the threshold limit. This preassembly condition is difficult to attain in normal operations. Although not recommended, operators oftentimes increase the proximity switch threshold to permit operation of magnetization circuit. This approach, however, can result in insufficient magnetic coupling for sustained operation. The excessive spacing at time of magnetization prevents the switchable magnets of the magnetic coupling mechanism from achieving full saturation, thereby reducing the clamping force. Further, the threshold adjustment also increases the amount of tolerable mold movement before establishing the emergency stop condition, further increasing the possibility of mold separation occurring before the emergency signal.

Thus, it is an objective of the present invention to provide a magnetic coupling device for a machine that insures adequate clamping forces for continued operation of the machine.

According to the present invention this objective is solved in an inventive manner by a magnetic clamping system according to claim 1.

Using a search coil for measuring the magnetic flux in a magnetic clamping device for determining the clamping force of the magnetic clamping device on a given workpiece insures adequate clamping forces for continued operation and furthermore provides a sensing system enabling greater sensitivity to mold separation, reduction in mold mounting alignment conditions, and assurance of magnetic saturation in the coupled condition prior to operation. Beneficially, this principle is also applicable to any configuration of magnets and the position and number of search coils used is adaptable to a particular application.

The search coil is magnetically coupled to said switchable magnet for effecting a voltage output in accordance with magnetic flux conditions between the switchable magnet and the workpiece related to changes in said magnetic clamping force.

According to a preferred embodiment there is provided a calculating means coupled to the search coil for providing an output signal based on changes in said magnetic flux conditions, wherein said calculating means comprises at least one integrating circuit connected to the search coil and/or a control means coupled to the search coil for providing a control signal based on changes in said magnetic flux conditions, in particular the rate of magnetic flux change versus time and/or magnetic permeability.

Thus, there is provided a magnetic clamping device having a sensor system able to detect permeability conditions at the magnetic holding unit for determining acceptable clamping forces, and to condition continued operations based on flux-based movement and permeability detection, and to provide a control signal based on changes in said flux condition for controlling activity of the workpiece in accordance therewith.

According to another preferred embodiment the magnetic holding unit further comprises an outer pole having a central axis and being formed of a ferromagnetic material, said outer pole including a base and a sleeve defining a cavity opening outwardly from said base, wherein the switchable magnet is located in said cavity and includes a primary solenoid coil and a permanent magnetic core having a magnetic axis aligned with said central axis and a normal magnetic polarity in an inactive state.

Within this embodiment it is beneficial if the magnetic holding unit additionally comprises a cylindrical inner pole formed of a ferromagnetic material operatively coupled to said permanent magnetic core and inwardly radially spaced from said sleeve and a band member between said sleeve and said inner pole, wherein said band member is formed of a permanent magnetic material having a magnetic polarity transverse to said central axis and magnetically aligned with a magnetic polarity of the permanent magnetic core.

Further beneficially an internal magnetic circuit is established in the inactive state through said inner and outer poles, said permanent magnetic core and said band member and an external magnetic circuit is established between the inner and outer poles and the workpiece in an active state by means of the primary solenoid coil reversing the polarity of the switchable magnet.

Within this embodiment the search coil may surround the primary solenoid coil or the inner pole. Thus, the search coil can be arranged in various locations convenient for measuring a change in the magnetic flux.

According to a further preferred embodiment the magnetic clamping device may comprise at least one or a plurality of further magnetic holding units respectively comprising switchable magnets contributing to the magnetic clamping force at the workpiece.

Within this further preferred embodiment at least one of or several of or all of the further magnetic holding units comprise sensing means, wherein each of said sensing means comprises a search coil adapted to provide a detection signal indicative of a magnetic flux being applicable for at least approximately determining a clamping force exerted on a work piece to be clamped by the respective magnetic holding unit.

Beneficially, a number of turns of the search coils of the sensing means of the different magnetic holding units varies between the different magnetic holding units, wherein at least one search coil comprises a significant higher number of turns than the respective other search coils.

It is preferable if the search coils of the magnetic holding units are monitored individually, wherein the search coils are connected to individual integrating circuits of the calculation means and/or the control means or if the search coils of the magnetic holding units are connected in series and a combined signal is monitored, wherein the combined search coils are connected to a first integrating circuit, and wherein at least one magnetic holding unit is monitored as a reference separately in that it is connected to a second integrating circuit. Therein, a gain of the first integrating circuit may differ from a gain of the second integrating circuit.

According to still another preferred embodiment of the magnetic clamping device the clamping force is displayed by a displaying means and/or the clamping force is communicated to further equipment, in particular an injection molding machine or an industrial robot, wherein an action of the further equipment is adjustable to the detected clamping force.

As the clamping force may be displayed or may be communicated to other equipment (e.g. an injection molding machine), the equipment is allowed to adjust its performance so as to minimize the risk of the magnetic clamping force being exceeded by forces generated by that equipment.

According to still another preferred embodiment of the magnetic clamping, device said workpiece is a mold component for an injection molding machine having a mold cavity and said switchable magnets having search coils are located adjacent said moid cavity.

Thus, proper magnetization and continual material contact for magnetic quick mold change systems on injection molding machines can be assured. As the sensor is able to determine acceptable magnetization between a magnetic clamp and a mold the Magnetic clamping device is applicable to quick mold change devices for molding machines wherein deleterious mold movements are detectable in order to minimize the risk of the mold falling from the magnetic clamp.

Further preferred embodiments of the magnetic clamping device are laid down in further dependent claims.

In a method for maintaining adequate magnetic forces at an interface disclosed in US-A-6,104,270, sensors detect the contribution given by ferrite blocks and an algorithm is capable of correcting their reading errors. It is not possible to control that the magnetic flux at the interface is sufficiently high to be efficient.

It is a further objective of the present invention to provide a method for detecting and controlling an operating state of a magnetic clamping device which minimizes a risk that a magnetic clamping force to a workpiece is exceeded by external forces applied to the workpiece.

This further objective is solved by a method according to claim 18.

Further preferred embodiments of the method for detecting and controlling an operating state of a magnetic clamping device are laid down in further dependent claims.

In the following, the present invention is explained in greater detail with respect to several embodiments thereof in conjunction with the accompanying drawing, in which:

Fig. 1    is a perspective view of a mold clamp assembly comprising a magnetic clamping device,

Fig. 2    is a schematic view of the head end of an injection molding machine,

Fig. 3    is a fragmentary view of a magnetic holding unit comprising a switchable magnet coupled to a control device and a sensing means,

Fig. 4A    is a graph depicting a change in a magnetic flux of the switchable magnet versus time resulting from a workpiece (mold) movement, a corresponding change of a voltage output of a search coil of the sensing means versus time and a resulting output of a movement detection system of the sensing means according to Fig. 3 ;

Fig. 48    is a graph depicting the magnetic flux change versus time for flux detection system of the sensing means according to Fig. 3;

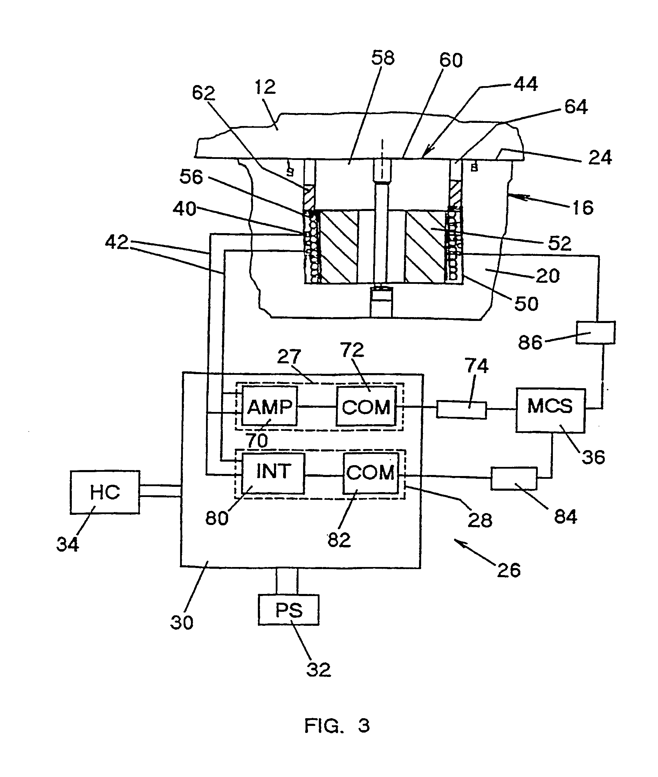

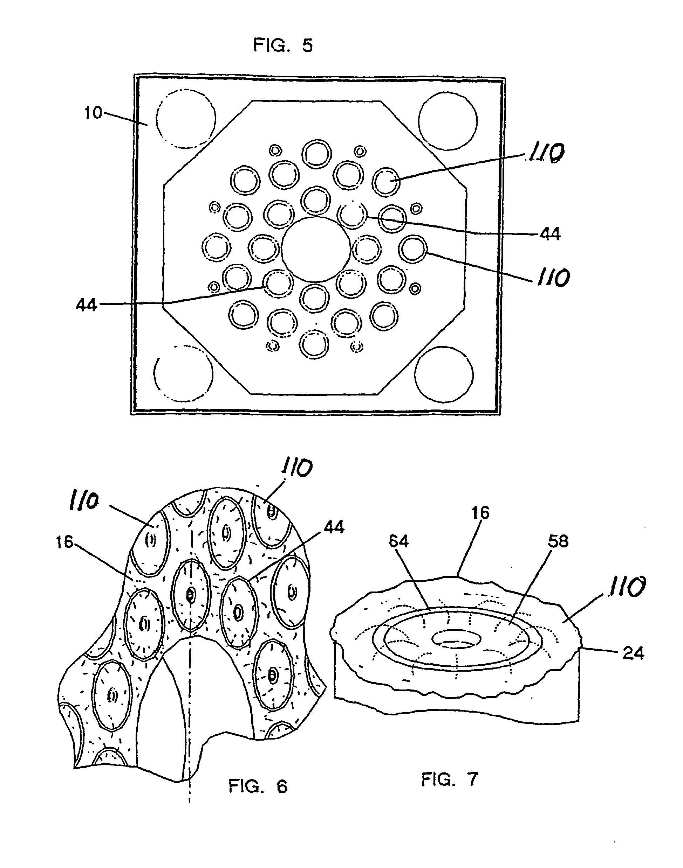

Fig. 5    is a front elevational view of a magnetic clamping device incorporating a magnetic holding unit according to Fig. 3;

Fig. 6    is a fragmentary perspective view of the magnetic clamping device of Fig. 5,

Fig. 7    is a further fragmentary perspective view of the magnetic clamping device of Fig. 5,

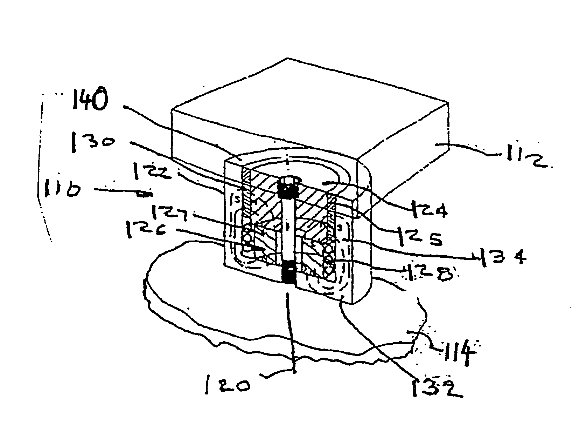

Fig. 8    is a perspective view of a magnetic holding unit without a sensing means in an inactive state, and

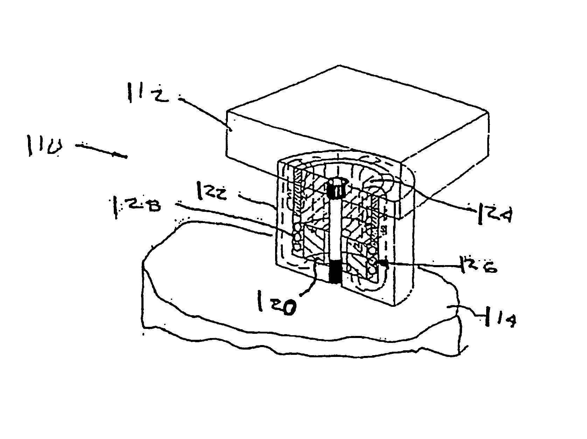

Fig. 9    is a perspective view of the magnetic holding unit of Fig. 8 in an active state.

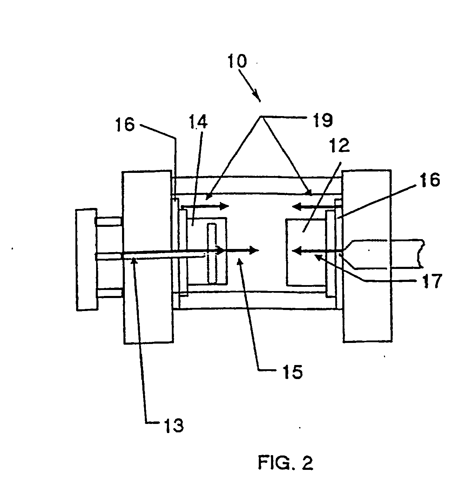

Fig. 2 schematically illustrates an embodiment of an injection molding machine 10 having a fixed platen 12 and a movable platen 14 respectively carried thereon by magnetic clamping devices ("clamps") 16 adapted to work as a quick mold change device. In conventional operation, many forces work against the holding forces generated by the clamps 16, i.e. ejector forces 13 due to incorrect machine adjustment, inertial forces 15 during mold closing travel, nozzle pressures 17 and mold opening forces 19.

To counteract such effects and other operational aspects generating disruptive magnetic clamping forces, a magnetic clamping device having a multiple function sensing system as described below is provided at the clamping interfaces, namely at the magnetic holding units 110.

An embodiment of the magnetic holding unit 110 is shown in Fig. 8 and 9, wherein the magnetic holding unit 110 establishes a magnetic clamping relationship with a ferromagnetic workpiece 112 for discrete location with respect to a mounting surface 114 to which the magnetic holding unit 110 is attached or is associated by suitable fastening means, not shown. The workpiece 112 may be unitary or a component of an assembly wholly or partially of magnetizable material.

The magnetic holding unit 110 is generally cylindrical about a central axis 120 and includes an outer pole 122, an inner pole 124, a non-magnetic spacer 125, a switchable (reversible) magnet 126 including a permanent magnetic core 127 and a solenoid coil 128, and a non-reversible permanent magnet 130. A threaded bolt, not shown extends through the centers of the aforementioned components to maintain the assembled relation. The outer pole 122 and the inner pole 124 have annular top pole faces lying in a common plane for engagement with and magnetic coupling to the workpiece.

The outer pole 122 includes a circular base 132, and an axially extending cylindrical sleeve 134. The base 132 includes a threaded aperture coaxial with the central axis 120 for securing the threaded end of the central fastener. The inner cylindrical surface of the sleeve 134 and the top surface 140 of the base 132 define an upwardly opening cylindrical cavity. The outer pole 122 is formed of a ferromagnetic material

The permanent magnetic core 127 is formed of a suitably low coercive material such as Alnico. The permanent magnetic core 127 is smaller in diameter than the cavity of the sleeve and coaxially aligned therewith. The permanent magnetic core 127 includes a center through hole with a clearance relation with the fastener. The permanent magnetic core 127 has a height in combination with the inner pole equal to the depth of the cavity. The permanent magnetic core 127 is exteriorly encircled by the solenoid coil 128, the arrangement being such that the switchable (reversible) magnet 126 has a clearance fit with respect to the sleeve. The solenoid coil 128 is connected in a conventional circuit, not shown, with the magnetic holding unit 110 for switching between an inactive state shown in Fig. 8 and an active state shown in Fig. 9 as described below.

The inner pole 124 is cylindrical and includes a central counterbored hole for receiving the head and shank of the fastener. As illustrated, the inner pole 124 has an outer diameter slightly larger than the permanent magnetic core 127 and a clearance relationship with the inner surface of the sleeve 134 to define therebetween an annulus for the receipt and housing of the spacer 125 and the permanent magnet 130. The inner pole 124 is formed of a ferromagnetic material.

The permanent magnet 130 is cylindrical and attached by interference fit or other suitable means to the outer surface of the inner pole 124. The permanent magnet 130 has a close sliding fit with respect to the inner surface of the sleeve. The permanent magnet 130 has a lower annular surface axially spaced from the solenoid coil (primary coil) 128 and an upper surface spaced below the top surfaces of the sleeve 134 and inner pole 124 to allow reception of the spacer 125. The permanent magnet 130 is formed of permanently magnetized material such a Neodymium Iron Boron.

The spacer 125 is cylindrical and is compressively retained between the sleeve 134 and the inner pole 124. The spacer is formed of a non-magnetic material such as brass and serves to seal the interior from contaminants. In assembly, the top surfaces of the spacer 125, the sleeve 134 and the inner pole 124 lie substantially in a common plane transverse to the central axis 120.

In an inactive state, the permanent magnetic core 127 has a magnetic axis parallel to the axis 120 with a pole orientation as representatively illustrated. The permanent magnet core 127 is similarly polarized with an axis transverse to the axis 120. Accordingly, an internalized magnetic circuit is established as indicated through induction of the outer pole 122 and inner pole 124. The components and magnetic properties are interrelated to completely internalize the magnetic flux in the inactive state to prevent attraction thereto of undesirable contaminants.

The solenoid coil (primary coil) 128 is momentarily activated in a conventional manner to establish the active state for clamping the workpiece. Therein, the polarity of the permanent magnetic core 127 is reversed resulting in an externalized magnetic circuit through the workpiece effectively clamping the latter thereto. By applying a reverse current to the solenoid coil (primary coil) 128, the inactive state is reestablished releasing the workpiece from the magnetic holding unit 110.

Summarizing the above description of the magnetic holding unit 110, it preferably comprises a cylindrical outer pole having a central axis and formed of a ferromagnetic material, said outer pole including a circular base and a cylindrical sleeve defining a cylindrical cavity opening outwardly from said base; a reversible magnetic unit (switchable magnet) located in said cavity including a cylindrical core having a magnetic axis aligned with said central axis and a normal magnetic polarity in an inactive state; a cylindrical inner pole formed of a ferromagnetic material operatively coupled to said core and inwardly radially spaced from said sleeve; an annular band member between said sleeve and said inner pole, said band member formed of a permanent magnetic material having a magnetic polarity transverse to said central axis and magnetically aligned with said normal magnetic polarity of the core whereby an internal magnetic circuit is established in the inactive state through said poles, said core and said permanent magnet to the exclusion of said workpiece, wherein said solenoid being operative to reverse the polarity of said core whereby an external circuit is established between said poles and said workpiece.

The described magnetic holding unit 110 may be employed in a variety of applications wherein it is desired to magnetically couple a ferromagnetic workpiece or tool to another device for transporting, clamping, locating and the like. The magnetic holding unit 110 may be employed as an independent magnetic module or in a group of magnetic holding units 110 and is particularly adapted for magnetically coupling parts and assemblies such as molds or tools. The magnetic holding unit 110 particularly may be deployed randomly for clamping varying configurations of workpieces without magnetic interference from or with adjoining devices. Tests have indicated that the magnetic holding unit 110 may be deployed in abutting relationship without interference or diminution in magnetic performance. Such tests indicate that the present design of the magnetic holding unit 110 presents a shallow magnetic flux height which is evenly balanced about the perimeter thereof.

In the following an embodiment of a magnetic clamping device in particular in relation to its sensing means for the preferred magnetic holding units (as have been discussed above) will be exemplified with respect to an injection molding machine, however without being limited to this type of machine. Particularly, it should be noted that such sensing means may be readily incorporated with magnetic clamping devices of varying types used in coupling workpieces or tools wherein it is desired to avoid continued operation in case an insufficient (inadequate) magnetic clamping forces is provided.

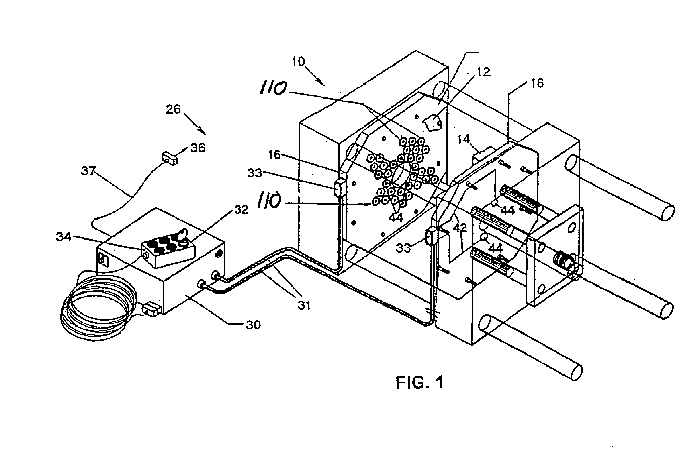

Referring to Figures 1, 3 and 5 through 7, each clamp (magnetic clamping device) 16 comprises a base plate 20 incorporating a plurality of annular switchable magnetic holding units 110 as described above. The coupling surface 24 of the base plate 20 is generally planar and coextensive with the mating surface of the mold 12. However, a single base plate design may handle a family of mold designs of varying configurations, which are not necessarily complementary surfaces, but sufficient to effect adequate magnetic coupling for the molding operation being conducted.

Referring to Figures 1 and 3 a sensing system 26 includes a movement sensing system 27 (also called movement sensor or movement detection system) and a permeability sensing system 28 (also called flux sensor), partially housed in a controller 30 connected to a power supply 32, operated by a hand control module 34, and operatively coupled with the clamps (magnetic clamping devices) 16 by cables 31 at connectors 33. The controller is interfaced with the molding machine control system 36 by cable 37.

In the movement sensing system 27, at least one of the magnetic holding units 110 is modified by incorporating a secondary or search coil 40 with secondary leads 42 leading to a connector 33 to establish a sensor magnet unit 44.

As will be described below, the movement sensing system 27 (movement detection system or movement sensor) detects motion conditions between the mold and the clamp 16 during molding and prevents operations if excessive movement conditions are detected. The permeability sensing system 28 (flux sensor) detects magnetic permeability conditions after magnetization and prevents molding operations from starting if inadequate magnetic conditions are detected. According to the shown embodiment the same search coils are used for the movement sensor 27 and the flux sensor 28, wherein the flux sensor 28 measures the total change in flux from demagnetized to magnetized states, and the movement sensor 27 measures (negative) changes in flux, instead of an absolute level of flux.

The sensor magnet unit 44, in its sensing capacity, operates independently or in concert with other sensor magnet units 44 in the clamping modes (magnetized/ demagnetized). The sensor magnet units 44 are located on the coupling surface 24 at design locations whereat excessive separation is deemed undesirable. Suitable positions are e.g. opposed at locations adjacent a mold cavity. Positions just within the area defined by a minimum recommended mold size for the clamp 16 are preferred. However, it should be noted that the sensor magnet unit 44 may be employed within a greater number of devices. Alternatively, the primary coils (solenoid coils) 56 of the selected sensor magnet units may be utilized for this function. Moreover, the search coils 40 may also be located around the inner pole 58.

More specifically, the sensor magnet units 44 are housed in a counterbore 50 formed in the base plate 20 and upwardly opening at the coupling surface 24. The sensor magnet units 44 include a cylindrical switchable magnet 52 coaxially located at the base of the counterbore 50 and surrounded by the primary coil 56 (solenoid coil) and the secondary coil 40 (search coil). A circular inner pole 58 of a ferromagnetic material and smaller in diameter than the counterbore is carried atop the magnet 52 and has an upper surface 60 coextensive with the coupling surface 24. An annular permanent magnet 62 is magnetically and mechanically coupled between the inner wall of the counterbore 50 and the inner pole 58. A filler ring 64 of non-magnetic material is installed above the magnet 62 flush with the inner pole 58 and the coupling surface 24. As has been described above, momentary energization of the primary coil 56 reverses the polarity of the magnet 52. Accordingly, in one condition of polarity, an internal magnetic circuit is established. In the other condition of polarity, an external magnetic circuit is established through the mold 12 to provide a shallow saturated magnetic flux height.

The movement sensing system 27 is extremely sensitive and detects the slightest movement of the mold 12 away from the magnet base plate 24. In operation, any physical separation between the mold and the base plate will provide a reduction in the magnetic flux through the magnet 52 and will induce a voltage change in the search coil 40 (secondary coil) in accordance with well known principles. The induced voltage will be a function of the product of secondary coil turns and rate of flux change versus time. Accordingly it will be appreciated that a small flux change over a short time interval will generate a significant voltage.

The output of the search coil (secondary coil) 40 is coupled to an amplifier 70 that is coupled with a voltage comparator 72. The comparator 72 is coupled to an interlock relay 74 in the molding machine control system 36. Beneficially, the search coil outputs may be fitted with low-pass filters to help prevent radio-frequency interference from causing unwanted activation of the movement sensing system. This may be necessary to comply with electro-magnetic compatibility standards.

The threshold value of the comparator 72 is conventionally established at a desired level. A satisfactory threshold has been utilized at about a minimum of around 14 mV. In operation, if the induced voltage in the search coil 40 produces an output voltage from the amplifier 70 at the comparator 72 greater than the selected threshold, the interlock relay 74 of the machine control system 36 is reversely conditioned resulting in an appropriate response by the control system 36, typically preventing further movement or process sequencing until the condition occasioning the emergency condition is examined and/or overcome, and if desired triggering an alarm 75.

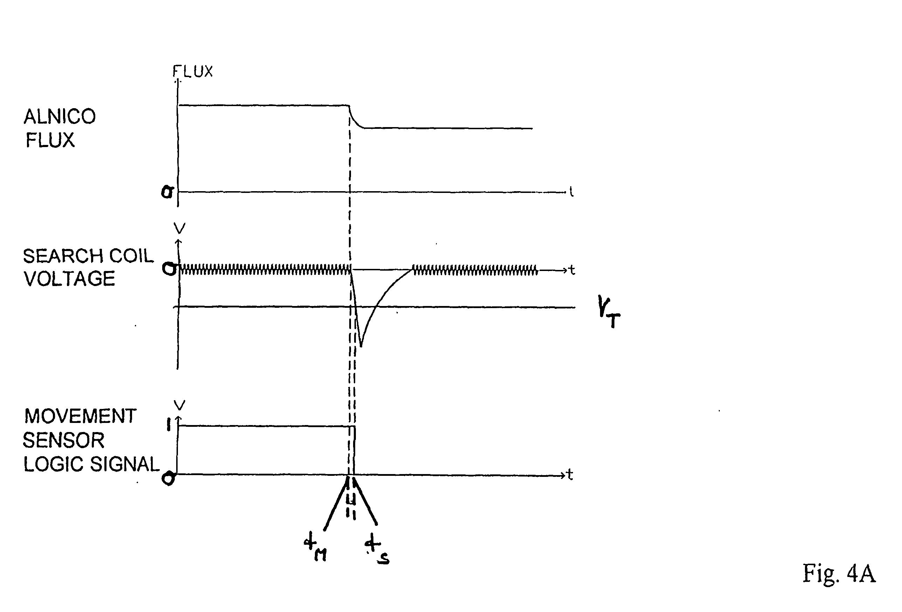

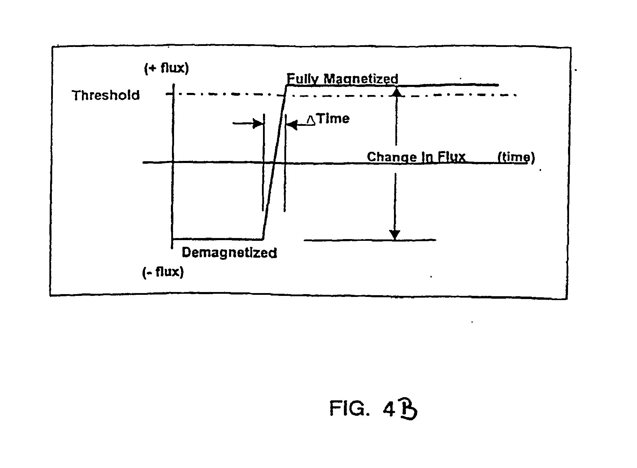

Fig. 4A depicts the foregoing conditions showing in the upper part thereof the change in the magnetic flux of the switchable magnet resulting from a movement of the workpiece (mold) in relation to the holding clamp 16 (mold platen), the search coil output resulting from the detected change in magnetic flux in the middle part thereof and the logical signal of the movement sensor resulting from the search coil output in the lower part thereof.

As derivable from the left part of the graph showing the flux over the time (upper part of Fig.4A), the detected flux remains constant while the workpiece (mold) is in a fixed position, as shown for any point in time on the timeline prior to time $t_M$. Under this conditions the voltage output of the search coil stays about zero, and only the noise signal usual for any electronic circuit is detected. Consequently, the movement sensor logical signal remains at a constant value, as well. In the present embodiment the (pre-)setting in this case is "one".

If a movement occurs between the workpiece and the clamp at $t_M$ (the left vertical dashed line in Fig. 4A), the detected magnetic flux is reduced, as the distance between the workpiece and the clamp increases. Same conditions is shown in the graph in the upper part of Fig. 4A after $t_M$. Due to the detected change (reduction) in the magnetic flux a voltage signal is detected, namely a negative voltage output signal is derived from the search coil (as shown in the graph in the middle part of Fig. 4A after $t_M$).

It should be noted that irrespective of this negative voltage output signal the movement sensor logical signal remains constant after $T_M$ until the negative voltage output signal reaches a certain threshold value $V_T$. Said threshold value $V_T$ is shown by the horizontal line in the graph in the middle part of Fig. 4A. After the negative voltage output signal has reached the threshold value $V_T$ at time $t_S$ (the right vertical dashed line in Fig. 4A) the movement sensor logical signal is changed, namely in the present embodiment the setting in this case is changed to "zero".

Thus, if said reduction in the voltage output of the search coil exceeds a certain (negative) threshold value $V_T$ the movement sensor is activated.

The present movement sensor system is extremely sensitive. It has been determined in operation that a 3% reduction in flux at magnet 52 over a 5 ms time interval generates a voltage exceeding the above threshold. Further, the threshold may be set such that an impact not causing detectable movement of the mold will signal an emergency condition thereby enabling prediction of potential for later adverse consequences in time to take remedial action in advance thereof. Oftentimes, such a level of sensitivity is not warranted and may be indicative of normal mold flexing or by lesser impacts not significant enough to cause or portend the risk of mold separation. Accordingly, the threshold may be adjusted to allow such discrimination.

Beneficially, in addition to initiating an emergency condition the movement sensor system may be used to initiate a further magnetizing current output from the control system in order to temporarily generate an additional electro-magnetic field. If this additional field acts on the workpiece before the separation of the workpiece from the chuck exceeds a certain critical distance the additional clamping force created will be sufficient to pull the workpiece back on to the chuck (magnetic clamping device), preventing it from falling to the ground and restoring the clamping force to a safer level. This beneficially further increases the safety of the system.

During magnetization of the clamping system, conditions may nonetheless exist compromising the magnetic permeability of the clamping system and resulting in insufficient clamping forces for initiating or maintaining operations. Exemplary causes are mold material conditions such as lack of adequate thickness, impaired surface finish, material irregularities, warpage, rust, foreign material, the magnetic properties of the mold base material, and the like, any of which can reduce clamping forces. Present control systems may detect poor magnetization due to electrical faults but do not account for inadequate permeability conditions.

Therefore, the present sensor system also includes a magnetic saturation detection mode using the permeability sensing system (flux sensor) 28. This feature is synergistic with the above-described movement detection, in that the same search coils can be used, however, the method of detection is different from the method of movement detection during clamping. Thus, in addition to use in the movement sensor system, the secondary coil (search coil) in the sensor magnet units is also employed to determine and discriminate permeability conditions.

Therein, the output of the amplifier 70 is coupled to an integrator 80. Prior to magnetization, the integrators are zeroed. After magnetization, the output of the integrators is proportional to the flux change in the magnets 52. The output of the integrator 80 is coupled to a comparator 82. The threshold of the comparator 82 is set at a level indicative of flux that establishes a clamping force sufficient for operations. At such conditions, an interlock 84 for permitting operation is actuated. If the threshold is not met, the alarm 75 is activated initiating a condition that must be examined and resolved prior resuming clamping. Tests have indicated that a gap of about 0.1 mm, between the mold and the mold platen and the clamp, is sufficient to denote insufficient flux. Alternative to ,or in addition to, the alarm, the controller may automatically demagnetize the clamp.

Fig. 4B depicts the foregoing conditions showing the rate change of flux between the demagnetized, decoupled state (inactive state) and the magnetized coupled state (active state) above the threshold indicative of sufficient clamping force. The change in flux from demagnetized to magnetized states forms the basis of the flux sensor.

Prior to final magnetization, it is important for both detection systems (movement sensor flux sensor) that the mold be physically abutting the chuck to enable saturation magnetization. Such relationship is difficult to ascertain visually by the operator. If magnetization is effected with the mold unacceptably remote from the chuck, the circuit will not be saturated but may be sufficient to statically maintain a clamping relationship. However, the level is insufficient to maintain normal operation, and the mold is susceptible to separation from the machine.

In the present embodiment during mold mounting, a magnet controller 86 coupled between the sensor magnet units 44 and the control system 36 initiates a first phase magnetization regardless of the physical relationship between the mold and the clamp. During the first phase magnetization, assuming the distance between the mold and the clamp is not excessive, sufficient force is developed to shift the mold the remaining distance towards the magnetic clamp. A predetermined time thereafter, sufficient for accommodating the needed shifting, a second phase of magnetization is initiated for final clamping. After this second phase magnetization, if the output of the integrator exceeds the threshold of the comparator 82, an interlock 84 for permitting operation is actuated. If the threshold is not exceeded then the magnet controller automatically demagnetizes the clamp and the alarm 75 is activated. This allows the mold to be removed and examined before attempting a further clamping operation. Furthermore, this automatic demagnetization feature prevents the possibility of the clamp being left magnetized without the mold present

According to a preferred embodiment of the sensing means detection signals of the search coils measuring the magnetic flux in the magnetic holding units are used for the purpose of predicting the (total) clamp force of the device on a given workpiece. The clamping force may be displayed or may be communicated to other equipment (e.g. an injection molding machine, an industrial robot or a manipulator) to allow the equipment to adjust its performance so as to minimize the risk of the magnetic clamping force being exceeded by forces generated by that equipment.

The principle of using a search coil to measure a change in magnetic flux utilized within this embodiment will be described in the following.

A single search coil generates a voltage output ε given by

$$\varepsilon = -N \, d\varphi/dt,$$

wherein N is the number of turns on the search coil, dφ is the change in magnetic through the search coil, dt is the time over which the change in flux takes place.

By integrating the voltage output ε from the search coil and dividing by the number of turns it is possible to calculate the change in magnetic flux.

$$\Delta\varphi = - (\textstyle\int \varepsilon \, dt) \, / \, N$$

From this and information about the areas through which this flux passes it is possible to estimate the clamping force.

The principle may be applied to any configuration of magnets and the position and number of search coils used may be adapted to a particular application.

What follows is a description of a particular embodiment in relation to a magnetic chuck designed to hold molds in injection molding machines.

The magnetic chuck operates on the established principle of electro-permanent magnetism. The chuck comprises a number of magnetic holding units.

The search coils may be wound either around the inner pole (central pole), or the permanent magnetic core (preferably a Alnico magnet), or around the primary solenoid coil, or in another location convenient for measuring a change in magnetic flux.

For the purpose of predicting the clamp force on any workpiece (mold) that may cover any number of magnetic holding units search coils are required on every magnetic holding unit. Each search coil may be monitored individually or alternatively they may be connected in series and the combined signal monitored. If the combined signal from many magnetic holding units is to be monitored then it may also be necessary to monitor one or more "reference magnetic holding units" separately to allow the combined signal to be interpreted correctly.

In the following an example is discussed, wherein a magnetic chuck consists of 40 magnetic holding units. Two "reference magnetic holding units" comprise search coils each having ten turns, the remaining 38 magnetic holding units each have search coils with one turn. The search coils are wound around the central pole (inner pole) piece of each magnetic holding unit, above the NdFeB magnets and therefore measure the flux passing from the central pole (inner pole) into the mold. The two "reference" search coils each having 10 turn are connected in series to a first integrating circuit having a gain of x100. The other 38 search coils are connected in series to a second integrating circuit via a potential divider or other circuit to achieve a lower total gain of x20 to prevent saturation of the integrating circuit.

Initially the chuck is in the OFF (demagnetized) condition (inactive state) and so there is negligible flux passing through the search coils.

A mold is placed on the chuck covering a certain number of magnetic holding units. The two "reference magnetic holding units" are completely covered by the mold.

The integrating circuits are zeroed.

The chuck is magnetized.

The output of the first integrating circuit provides a reference level. For example if the integrated voltage is 9.5V then it is assumed that each ten turn coil gives 4.75V.

Given that the search coils have ten turns and the integrator has a gain of x100 it is calculated that the change in magnetic flux for each pot is 4.75mWb. In this example the area of the central pole (inner pole) is 28.46 $cm^2$ and so the flux density is 1.67T.

Assuming the induced pole area is the same, then the clamp force in Newton is given by

$$F = B^2 A / (2\mu_o),$$

wherein $\mu_o = 4\pi \times 10^{-7}$, the permeability of free-space (air)

So in this example

$$F = 1.67^2 \times (2 \times 28.46 \times 10^{-4}) / (2\mu_o)$$
$$= 6316 \, N$$

It is assumed that each covered magnetic holding units having a single turn search coil will give the same change in flux and hence an integrated output of 0.095V (given a gain of x20). The signals from each of the magnetic holding units combine so that the output voltage of the second integrator is the sum of the individual outputs, by using this figure it is therefore possible to calculate the total number of magnetic holding units covered. Since the clamping force per magnetic holding units has already been calculated it is therefore possible to calculate the total clamping force.

For example if the voltage output of the second integrator is 2.47V then the number of additional magnetic holding units covered = 2.47/0.095 = 26. So with the two reference magnetic holding units a total of 28 magnetic holding units are covered.

The total clamp force can now be calculated as 6316 x 28 = 176.8 kN.

In practice it may be that the mold covers some magnetic holding units only partially. The flux and clamp force are not directly proportional to the area covered and so some error in the calculation may result Allowance may be made for this in the algorithm used to calculate the clamp force or a data table derived from empirical tests may be used to further refine the calculation. Also it would be possible for the control system to have information as to the layout of the magnetic holding units and to use this in conjunction with the flux readings to calculate further information about how many magnetic holding units are fully covered and how many partially covered.

Furthermore the control system may monitor the temperature of the magnetic clamping device in order to automatically calculate any change in clamp force resulting from a change in temperature. Beneficially, this enhances the accuracy of the force displayed and/or communicated to the machine over the whole period of operation of the machine. The flux sensing system described above measures the change in flux between the unclamped and clamped state and calculates a force based on that flux. However, over a period of time the temperature of the clamping device may increase due to heat transfer (for example from the mold and injection nozzle), this may lead to a reduction in the flux output of the magnets (in particular of NdFeB) and a corresponding reduction in clamp force. By monitoring the temperature the display of the clamp force and/or the information sent to the machine can be updated continuously. Additionally, the monitoring of the temperature is beneficial since if the temperature of the system exceeds a critical level irreversible damage may occur (particularly to the NdFeB magnets) and so the control system may be used to initiate an emergency condition in which further heat input is prevented until such time as the temperature falls back below a certain level. Alternatively this thermal protection may be more simply achieved using other thermal sensors such as a thermal switch and/or thermal fuse.

There might be a concern that an only gradual change, such as that resulting from a gradual increase in temperature will induce only a miniscule voltage. Thus, in some particular cases continuously monitoring the absolute level of flux using the search coils described above might not be fully sufficient as the detected miniscule voltage would be hardly distinguishable from the noise voltages inherent in electronic circuits which cause a gradual drift in the output of the integrator circuit. This particular matter is addressed in a further embodiment of the magnetic clamping device including magnetic sensing units which operate in the same way as those previously described but do not contribute significantly to the clamping force. This means they can be demagnetized and magnetized at any time to measure a flux change dependent on the state of the magnetic circuit (intemalizedlextemalized) at that time.

Beneficially, this would take into account a reduction in the performance of the magnets due to increased temperature as well as any other changes such as a gradual separation of the workpiece from the chuck allowing a more accurate value of the clamping force to be displayed and/or communicated to the machine over the whole period of operation of the machine.

The above description, discloses a sensor system for determining acceptable magnetization between a magnet holding unit having a switchable magnet generating a magnetic clamping force at a workpiece, comprising: coil means magnetically coupled with said switchable magnet for effecting a voltage output in accordance with magnetic flux conditions between the magnet and the workpiece related to changes in said magnetic clamping force; and control means coupled to said output for providing a control signal based on changes in said flux conditions.

Said control means preferably generates said control signal if changes in said flux conditions exceed a threshold value, wherein said control means may includes means for varying said threshold value.

Additionally said switchable magnet may include a primary coil and said coil means may comprise a secondary coil surrounding said primary coil.

There may be provided a magnetic clamping device including a plurality of magnetic holding units with switchable magnets, at least one of which includes said secondary coil. However, it is preferred that several or all of the magnetic holding units with switchable magnets include a secondary coil.

Preferably said workpiece is a mold component for an injection molding machine having a mold cavity and said magnetic holding units having switchable magnets and said secondary coil are located adjacent said mold cavity. Therein changes in said magnetic flux conditions are used as an indication of separation movement between said workpiece and said magnet holding units and that said threshold value is less than flux conditions that would decrease said clamping forces below a level maintaining contact between said magnet device and said workpiece. Particularly, such separation movements are determined if a negative induced voltage exceeds the movement sensor threshold and not when the integrated flux value falls back below the flux sensor threshold.

Preferably said control means includes amplifier means having a input for said control signal and an amplified output, and comparator means having an input for said amplified output and for generating said control signal if said amplified output is above said threshold value.

Further preferably said control means determines flux conditions at said secondary coil and generates said control signal if a threshold value is not attained, wherein said control means may determine the level of flux change between a demagnetized condition for the switchable magnet and a magnetized condition for the switchable magnet and generates said control signal if said threshold value is not attained, and wherein said control means may include resetting integrator means for receiving said output and generating an output based on said flux change, and comparator means receiving said output and generating said control signal if said threshold value is not attained.

The sensor system may also include a workpiece controller coupled with said control signal for controlling activity of said workpiece in accordance therewith. Said workpiece controller may further initiate an alarm if said control signal does not evidence a threshold value. Said workpiece controller may additionally preclude further activity of said workpiece if said control signal does not evidence a threshold value. Moreover, said workpiece controller may preclude further activity of said workpiece if said control signal does not attain a threshold value based on said flux conditions. Finally, said workpiece controller may also preclude further activity of said workpiece if said control signal exceed a threshold value based on changes in said flux conditions.

The above description, further discloses a magnetic clamping system for a mold of an injection molding machine, comprising: a magnet device having a clamping surface for engaging said mold at a clamping interface; a plurality of switchable permanent electromagnets on said magnet device for establishing a magnetic clamping force at said clamping interface, said electromagnets including a coil member; a movement detector sensor system operatively associated with at least one of said electromagnets and including first means for determining changes in magnetic flux conditions at said clamping interface and generating a first caution signal if a threshold value is exceeded; a permeability sensor system operatively associated with at least one of said electromagnets and including second means for determining changes in flux at said between a demagnetized condition and a magnetized condition and generating a second caution signal if said threshold value is not attained; and controller means for receiving said caution signals and determining continued activity of said injection molding machine based thereon.

The magnetic clamping device described above may include means for initiating a first magnetization of said magnet device, ceasing said first magnetization, and initiating a second magnetization of said magnet device after said ceasing. Therein, the double magnetization is not necessarily a function of the sensor system but is normally done in each case regardless of the measured flux. The first magnetization acts to ensure the workpiece (mold) is in proper contact with the chuck to achieve the optimal conditions for the second magnetization. The second magnetization then magnetizes the Alnico magnets under those optimal conditions to maximize the magnetic flux produced by the Alnico. The flux change measured is the combined result of both magnetization cycles.

The above description, additionally discloses a method for maintaining adequate magnetic forces at an interface between a magnetic clamping device and a workpiece during operations thereat, comprising the steps of: placing an inductive coil in said clamping device adjacent said interface; detecting the change in flux in said coil during said operations; generating a first alert condition if said change in flux exceeds a threshold value; detecting the level of flux in said coil prior to said operations; and generating a second alert condition if said level of flux does not attain a threshold level.

## Claims

1. A magnetic clamping system for a workpiece (12) or for a mold of an injection molding machine, comprising a magnet device (16) having a clamping surface for engaging said workpiece or mold at a clamping interface; a plurality of reversible magnets (52) on said magnet device (16) for establishing a magnetic clamping force at said clamping interface, said magnets (52) including a coil member (56); a permeability sensor system (28) operatively associated with at least one of said magnets (52) and including first means in the form of a search coil (40) for determining total changes in magnetic flux at said clamping interface between a demagnetized condition and magnetized condition of said magnet device (16) and generating a first caution signal if a threshold value is not attained; controller means (30) for receiving said first caution signal and for at least approximately determining a clamping force exerted on the workpiece to be clamped **characterized in that** it also includes a workpiece or mold movement sensing system (27) operatively associated with at least one of said magnets (52) and including second means for determining changes in magnetic flux conditions at said clamping interface and generating a second caution signal if a threshold value is exceeded; controller means (30) for receiving said second caution signal and detecting motion conditions between the workpiece or the mold and the clamping system.

2. A magnetic clamping system according to claim 1 **characterized in that** said second means are in the form of a search coil (40).

3. Magnetic clamping system according to claim 1 or claim 2, **characterized in that** the search coil (40) is magnetically coupled to one of said reversible magnets (52, 56) for effecting a voltage output in accordance with magnetic flux conditions between the reversible magnet and the workpiece (12) related to changes in said magnetic clamping force.

4. Magnetic clamping system according to claim 3, **characterized by** a calculating means coupled to the search coil for providing an output signal based on changes in said magnetic flux conditions, wherein said calculating means comprises at least one integrating circuit (80) connected to the search coil (40) and/or a control means coupled to the search coil for providing a control signal based on changes in said magnetic flux conditions, in particular the rate of magnetic flux change versus time and/or magnetic permeability.

5. Magnetic claimping system according to at least one of the preceding claims 1 to 4, **characterized in that** it includes at least one magnetic holding unit (110) which comprises an outer pole (122) having a central axis and being formed of a ferromagnetic material, said outer pole including a base (132) and a sleeve (134) defining a cavity opening outwardly from said base, wherein the reversible magnet is located in said cavity and includes a primary solenoid coil and a permanent magnetic core having a magnetic axis aligned with said central axis and a normal magnetic polarity in.an inactive state.

6. Magnetic clamping system according to claim 5, **characterized in that** the magnetic holding unit further comprises a cylindrical inner pole (124) formed of a ferromagnstic material operativaly compled to said permanent magnetic core and inwardly radially spaced from said sleeve and a band member (125) between said sleeve and said inner pole, wherein said band member is formed of a permanent magnetic material having a magnetic polarity transverse to said central axis and magnetically aligned with a magnetic polarity of the permanent magnetic core.

7. Magnetic clamping system according to claim 6, **characterized in that** an internal magnetic circuit is established in the inactive state through said inner and outer poles, said permanent magnetic core and said band member and an external magnetic circuit is established between the inner and outer poles and the workpiece in an active state by means of the primary solenoid coil reversing the polarity of the reversible magnet.

8. Magnetic clamping system according to claim 6 or 7, **characterized in that** the search coil surrounds the primary solenoid coil or the inner pole.

9. Magnetic clamping system according to at least one of the preceding claims 1 to 8, **characterized in that** it includes at least one or a plurality of further magnetic holding units (110) respectively comprising reversible magnets contributing to the magnetic clamping force at the workpiece.

10. Magnetic clamping system according to claim 9, **characterized in that** at least one of or several of or all of the further magnetic holding units (110) comprise sensing means (26), wherein each of said sensing means comprises a search coil (40) adapted to provide a detection signal indicative of a magnetic flux being applicable for at least approximately determining a clampong force exerted on a work piece (12) to be clamped by the respective magnetic holding unit.

11. Magnetic clamping system according to claim 19 **characterized in that** a number or turns of the search coils (40) the sensing means of the different magnetic holding units (110) varies between The different magnetic holding units, wherein at least one search coil comprises a signifficant higher number of turns than the respective other search coils.

12. Magnetic clamping system according to claim 10 or 11, **characterized in that** the search coils (40) of the magnetic holding units are monitored individually, wherein the search coils are connected to individual integrating circuits of the calculation means and/or the control means or in mat the search coils of the magnetic holding units (110) are connected in series and a combined signal is monitored, wherein the combined search coils are connected to a first integrating circuit, wherein at least one magnetic holding unit is monitored as a reference separately **in that** it is connected to a second integrating circuit.

13. Magnetic clamping system according to claim 12, charcterized in that a gain of the first integrating circuits is different from a gain of the second integrating circuit.

14. Magnetic clamping system according to at least one of the preceding claims 10 to 13, **characterized in that** at least one of the magnetic holding units (110) comprising a sensing means in demagnetizable and magnetizable irrespective of the clamping conditions for detecting the clamping conditions, in particular irrespective of the clamping force of the further magnetic holding units and irrespective of a state of the magnetic circuit of the magnetic clamping system.

15. Magnetic clamping system according to at least one of the preceding claims 1 to 14, **characterized in that** the clamping force is displayed by a displaying means and/or the claimping force is communicated to further equipement, in particular an injection molding machine (10), wherein an action of the further equipement is adjustable to the detected clamping force.

16. Magnetic clamping system according to at least one of the preceding claims 1 to 15, **characterized in that** said workpiece (12) is a mold component for an injection molding machine (10) having a mold cavity and said reversible magnets having search coils (40) are located adjacent said mold cavity.

17. Magnetic damping system according to at least one of the preceding claims, **characterized in that** the same search coils (40) are used respectively as first and second determining means in said permeability sensing system (28) and said movement sensing system (27).

18. A Method for detecting and controlling an operating state of a magnetic clamping device at a clamping interface between a workpiece (12) or a mold and said clamping device, said method comprising the steps of:

- placing at least an inductive search coil (40) in said magnetic clamping device (16)
- detecting a change in magnetic flux at said interface, between a magnetized condition and a demagnetized condition of said magnetic clamping device by monitoring a voltage output from said search coil (40) and
- estimating the magnetic clamping force based on the change in the magnetic force at said interface

**characterized in that** it also includes the steps of:

- detecting motion conditions of said wofkpiece or mold with respect to said magnetic clamping device at said interface and
- preventing operation if excessive movement conditions are detected.

19. Method according to claim 18, **characterized in that** motion conditions between a workpiece and the magnetic clamping device (16) ara determined based on measured negative changes in magnetic flux, wherein operation is prenvented if excessive movement conditions are detected and/or clamping conditions, in particular the magnetic clamping force, are determined based on a total change in the magnetic flux from demagnetized to magnetized states, wherein operations are prevented from starting if inadequate clamping conditions are detected.

20. Method according to claim 18 or 19, **characterized in that** the magnetic flux is continuously monitored and the magnetic clamping force is continuously calculated based on the monitored magnetic flux.

21. Method according to at least one of the preceding claims 18 to 20 **characterized in that** a temperature of the magnetic clamping device (16) is measured for automatically calculating a change in the damping force resulting from a change in the temperature.

22. Method according to at least one of the preceding claims 18 to 21 **characterized in that** a further magnetizing current output is initiated for temporarily generating an additional electro-magnetic field if motion between a workpiece and the magnetic clamping device (16) is detected.

**Patentansprüche**

1. Magnetisches Klemmsystem für ein Werkstück (12) oder für eine Form einer Spritzgussmaschine, umfassend eine Magnetvorrichtung (16) mit einer Klemmfläche zum Aufnehmen des Werkstücks oder der Form an einer Klemmkopplungs-Fläche; eine Mehrzahl von Schaltmagneten (52) an der Magnetvorrichtung (16) zum Erzeugen einer magnetischen Klemmkraft an der Klemmkopplungsfläche, wobei die Magnete (52), die ein Spulenelement (56) einschließen; ein Permeabilitätssensorsystem (28), das operativ mindestens einem der Magnete (52) zugeordnet ist und erste Mittel in Form einer Suchspule (40) zum Bestimmen von totalen Änderungen im Magnetfluss an der Klemmkopplungsfläche zwischen einem entmagnetisierten Zustand und einem magnetisierten Zustand der Magnetvorrichtung (16) einschließt, und ein erstes Warnsignal erzeugt, wenn ein Schwellenwert nicht erreicht wird; Steuermittel (30) zum Empfangen des ersten Warnsignals und zum zumindest näherungsweisen Bestimmen einer auf das zu klemmende Werkstück ausgeübten Klemmkraft, **dadurch gekennzeichnet, dass** es auch umfasst: ein System (27) zum Abtasten einer Bewegung des Werkstücks oder der Form, das operativ mindestens einem der Magnete (52) zugeordnet ist und zweite Mittel zum Bestimmen von Änderungen der Magnetflussbedingungen an der Klemmkopplungsfläche und Erzeugen eines zweiten Warnsignals einschließt, wenn ein Schwellenwert überschritten wird; Steuermittel (30) zum Empfangen des zweiten Warnsignals und Abtasten von Bewegungszuständen zwischen dem Werkstück oder der Form und dem Klemmsystem.

2.  Magnetisches Klemmsystem nach Anspruch 1, **dadurch gekennzeichnet, dass** die zweiten Mittel in Form einer Suchspule (40) ausgebildet sind.

3.  Magnetisches Klemmsystem nach Anspruch 1 oder Anspruch 2, **dadurch gekennzeichnet, dass** die Suchspule (40) magnetisch mit einem der Schaltmagnete (52, 56) zum Hervorrufen eines Spannungsausgangssignals in Übereinstimmung mit den Magnetflussbedingungen zwischen dem Schaltmagnet und dem Werkstück (12) gekoppelt ist, die mit Änderungen der magnetischen Klemmkraft in Beziehung stehen.

4.  Magnetisches Klemmsystem nach Anspruch 3, **gekennzeichnet durch** mit der Suchspule gekoppelte Berechnungsmittel zum Liefern eines Ausgangssignals basierend auf Änderungen der Magnetflussbedingungen, wobei die Berechnungsmittel mindestens einen Integrierkreis (80), der mit der Suchspule (40) verbunden ist und/oder Steuermittel umfassen, die mit der Suchspule zum Liefern eines Steuersignals basierend auf Änderungen der Magnetflussbedingungen, insbesondere der Änderungsrate des Magnetflusses über die Zeit und/oder der magnetischen Permeabilität gekoppelt sind.

5.  Magnetisches Klemmsystem nach mindestens einem der vorhergehenden Ansprüche 1 bis 4, **dadurch gekennzeichnet, dass** es mindestens eine Magnethalteeinheit (110) einschließt, die einen Außenpol (122) mit einer Mittelachse umfasst, der aus einem ferromagnetischen Material gebildet ist, wobei der Außenpol eine Basis (132) und eine Hülse (134) einschließt, die einen sich von der Basis nach außen erstreckenden Hohlraum begrenzt, wobei der Schaltmagnet in dem Hohlraum angeordnet ist und mindestens eine Primärmagnetspule und einen permanentmagnetischen Kern einschließt, der eine Magnetachse, ausgerichtet mit der Mittelachse, und eine senkrechte magnetische Polarität im inaktiven Zustand aufweist.

6.  Magnetisches Klemmsystem nach Anspruch 5, **dadurch gekennzeichnet, dass** die Magnethalteeinheit weiterhin einen zylindrischen, aus ferromagnetischem Material gebildeten Innenpol (124), der operativ mit dem Permanentmagnetkern gekoppelt und radial nach innen zu der Hülse beabstandet ist, und ein Bandelement (125) zwischen der Hülse und dem Innenpol umfasst, wobei das Bandelement aus einem permanentmagnetischen Material mit einer magnetischen Polarität quer zur Mittelachse und magnetisch ausgerichtet mit einer magnetischen Polarität des Permanentmagnetkerns gebildet ist.

7.  Magnetisches Klemmsystem nach Anspruch 6, **dadurch gekennzeichnet, dass** ein innerer Magnetkreis im aktiven Zustand durch den Innen- und den Außenpol, den Permanentmagnetkern und das Bandelement hergestellt wird, und ein äußerer Magnetkreis zwischen dem Innen- und dem Außenpol und dem Werkstück im aktiven Zustand mittels der Primärmagnetspule hergestellt wird, die die Polarität des Schaltmagneten umkehrt.

8.  Magnetisches Klemmsystem nach Anspruch 6 oder 7,
    **dadurch gekennzeichnet, dass** die Suchspule die Primärmagnetspule oder den Innenpol umgibt.

9.  Magnetisches Klemmsystem nach einem der vorhergehenden Ansprüche 1 bis 8, **dadurch gekennzeichnet, dass** es mindestens eine oder eine Mehrzahl von weiteren Magnethalteeinheiten (110) einschließt, die jeweils Schaltmagneten umfassen, die zu der magnetischen Klemmkraft an dem Werkstück beitragen.

10. Magnetisches Klemmsystem nach Anspruch 9, **dadurch gekennzeichnet, dass** mindestens eine oder mehrere oder alle der weiteren Magnethalteeinheiten (110) Abtastmittel (26) umfassen, wobei jedes der Abtastmittel eine Suchspule (40) umfasst, die geeignet ist, ein Abtastsignal zu liefern, das angibt, dass ein Magnetfluss für eine zumindest näherungsweise Bestimmung einer Klemmkraft geeignet ist. die auf das durch die jeweilige Magnethalteeinheit zu klemmende Werkstück (12) ausgeübt wird.

11. Magnetisches Klemmsystem nach Anspruch 10, **dadurch gekennzeichnet, dass** eine Anzahl von Windungen der Suchspulen (40) der Abtastmittel der verschiedenen Magnethalteeinheiten (110) unter den verschiedenen Magnethalteeinheiten variiert, wobei mindestens eine Suchspule eine signifikant höhere Anzahl von Windungen als die jeweils anderen Suchspulen umfasst.

12. Magnetisches Klemmsystem nach Anspruch 10 oder 11, **dadurch gekennzeichnet, dass** die Suchspulen (40) der Magnethalteeinheiten individuell überwacht werden, wobei die Suchspulen mit individuellen Integrierkreisen der Berechnungsmittel und/oder der Steuermittel verbunden sind oder dass die Suchspulen der Magnethalteeinheiten (110) in Reihe geschaltet sind und ein kombiniertes Signal überwacht wird, wobei die kombinierten Suchspulen mit einem ersten Integrierkreis verbunden sind, wobei mindestens eine Magnethalteeinheit als Referenz getrennt überwacht wird, dahingehend, dass sie mit einem zweiten Integrierkreis verbunden ist.

13. Magnetisches Klemmsystem nach Anspruch 12, **dadurch gekennzeichnet, dass** eine Verstärkung des ersten Integrierkreises unterschiedlich zu einer Verstärkung des zweiten Integrierkreises ist.

14. Magnetisches Klemmsystem nach mindestens einem der vorhergehenden Ansprüche 10 bis 13, **dadurch gekennzeichnet, dass** mindestens eine der Magnethalteeinheiten (110), die Abtastmittel umfasst, unabhängig von den Klemmbedingungen entmagnetisierbar und magnetisierbar ist zum Detektieren der Klemmbedingungen, insbesondere unabhängig von der Klemmkraft weiterer Magnethalteeinheiten und unabhängig vom Zustand des Magnetkreises des Magnetklemmsystems.

15. Magnetisches Klemmsystem nach mindestens einem der vorhergehenden Ansprüche 1 bis 14, **dadurch gekennzeichnet, dass** die Klemmkraft durch Anzeigemittel angezeigt wird und/oder die Klemmkraft zu einer weiteren Ausrüstung, insbesondere einer Spritzgussmaschine (10) kommuniziert wird, wobei eine Aktion der weiterer. Ausrüstung auf die abgetastete Klemmkraft einstellbar ist.

16. Magnetisches Klemmsystem nach mindestens einem der vorhergehenden Ansprüche 1 bis 15, **dadurch gekennzeichnet, dass** das Werkstück (12) eine Formkomponente einer Spritzgussmaschine (10) mit einem Formhohlraum ist und die Suchspulen (40) aufweisenden Schaltmagnete benachbart zum Formhohlraum angeordnet sind.

17. Magnetisches Klemmsystem nach mindestens einem der vorhergehenden Ansprüche, **dadurch gekennzeichnet, dass** dieselben Suchspulen (40) jeweils als erstes und zweites Bestimmungsmittel in dem System (28) zum Abtasten der Permeabilität und in dem System (27) zum Abtasten der Bewegung verwendet werden.

18. Verfahren zum Detektieren und Steuern des Betriebszustands einer Magnetklemmvorrichtung an einer Klemmkopplungsfläche zwischen einem Werkstück (12) oder einer Form und der Klemmvorrichtung, wobei das Verfahren die Schritte umfasst:

   - Anordnen mindestens einer induktiven Suchspule (40) in der Magnetklemmvorrichtung (16)
   - Abtasten einer Änderung des Magnetflusses an der Kopplungsfläche zwischen einer magnetisierten Zustand und einer entmagnetisierten Zustand der Magnetklemmvorrichtung durch Überwachen eines Spannungsausgangssignals von der Suchspule (40) und
   - Einschätzen der Magnetklemmkraft basierend auf der Änderung der Magnetkraft an der Kopplungsfläche

   **dadurch gekennzeichnet, dass** es auch die Schritte umfasst:

   - Abtasten von Bewegungsbedingungen des Werkstücks oder der Form in Bezug auf die Magnetklemmvorrichtung an der Kopplungsfläche und
   - Verhindern einer Operation, wenn exzessive Bewegungsbedingungen abgetastet werden.

19. Verfahren nach Anspruch 18, **dadurch gekennzeichnet, dass** die Bewegungszustände zwischen dem Werkstück und der Magnetklemmvorrichtung (16) basierend auf gemessenen negativen Änderungen des Magnetflusses bestimmt werden, wobei eine Operation verhindert wird, wenn exzessive Bewegungszustände abgetastet werden und/oder Klemmbedingungen, insbesondere die magnetische Klemmkraft, basierend auf einer totalen Änderung des Magnetflusses von einem entmagnetisierten Zustand in einen magnetisierten Zustand bestimmt werden, wobei ein Beginn von Operationen verhindert wird, wenn unangemessene Klemmbedingungen detektiert werden.

20. Verfahren nach Anspruch 18 oder Anspruch 19, **dadurch gekennzeichnet, dass** der Magnetfluss kontinuierlich überwacht und die Magnetklemmkraft basierend auf dem überwachten Magnetfluss kontinuierlich berechnet wird.

21. Verfahren nach mindestens einem der vorhergehenden Ansprüche 18 bis 20, **dadurch gekennzeichnet, dass** eine Temperatur der Magnetklemmvorrichtung (16) zur automatischen Berechnung einer Änderung der Klemmkraft, resultierend aus einer Änderung der Temperatur, gemessen wird.

22. Verfahren nach mindestens einem der vorhergehenden Ansprüche 18 bis 21, **dadurch gekennzeichnet, dass** ein weiteres Magnetisierungsstromausgangssignal zur zeitweisen Erzeugung eines zusätzlichen Elektromagnetfeldes initiiert wird, wenn eine Bewegung zwischen einem Werkstück und der Magnetklemmvorrichtung (16) detektiert wird.

**Revendications**

1. Système de serrage magnétique pour une pièce à travailler (12) ou pour un moule d'une machine à mouler par injection, comportant un dispositif d'aimants (16) ayant une surface de serrage pour venir en contact avec ladite pièce à travailler ou avec ledit moule sur une interface de serrage, plusieurs aimants réversibles (52) sur ledit dispositif d'aimants (16) pour établir une force de serrage magnétique sur ladite interface de serrage, lesdits aimants (52) incluant un élément de bobine (56), un système (28) de capteur de perméabilité associé de manière fonctionnelle à au moins un desdits aimants (52) et incluant des premiers moyens ayant la forme d'une bobine exploratrice (40) pour déterminer des variations totales de flux magnétique sur ladite interface de serrage entre un état désaimanté et un état aimanté dudit dispositif à aimants (16) et pour produire un premier signal d'avertissement si une valeur de seuil n'est pas atteinte, des moyens de commande (30) pour recevoir ledit premier signal d'avertissement et pour déterminer au moins approximativement une force de serrage exercée sur la pièce à travailler à serrer, **caractérisé en ce qu'**il comporte également un système (27) de détection de mouvement de pièce à travailler ou de moule associé de manière fonctionnelle à au moins un desdits aimants (52) et incluant des seconds moyens pour déterminer des variations de conditions de flux magnétique sur ladite interface de serrage et pour produire un second signal d'avertissement si une valeur de seuil est dépassée, des moyens de commande (30) pour recevoir ledit second signal d'avertissement et pour détecter des conditions de mouvement entre la pièce à travailler ou le moule et le système de serrage.

2. Système de serrage magnétique selon la revendication 1 **caractérisé en ce que** lesdits seconds moyens ont la forme d'une bobine exploratrice (40).

3. Système de serrage magnétique selon la revendication 1 ou 2, **caractérisé en ce que** la bobine exploratrice (40) est magnétiquement reliée à l'un desdits aimants réversibles (52, 56) pour produire une sortie de tension en fonction de conditions de flux magnétique entre l'aimant réversible et la pièce à travailler (12) associées à des variations de ladite force de serrage magnétique.

4. Système de serrage magnétique selon la revendication 3, **caractérisé par** des moyens de calcul reliés à la bobine exploratrice pour créer un signal de sortie sur la base de variations desdites conditions de flux magnétique, dans lequel lesdits moyens de calcul comportent au moins un circuit intégrateur (80) relié à la bobine exploratrice (40) et/ou des moyens de commande reliés à la bobine exploratrice pour créer un signal de commande sur la base de variation desdites conditions de flux magnétique, en particulier la vitesse de variation de flux magnétique en fonction du temps et/ou de la perméabilité magnétique.

5. Système de serrage magnétique selon au moins une des revendications précédentes 1 à 4, **caractérisé en ce qu'**il inclut au moins une unité de blocage magnétique (110) qui comporte un pôle extérieur (122) ayant un axe central et étant formé d'un matériau ferromagnétique, ledit pôle extérieur incluant une base (132) et un manchon (134) définissant une cavité ouverte vers l'extérieur à partir de ladite base, dans lequel l'aimant réversible est positionné dans ladite cavité et inclut une bobine de solénoïde primaire et un noyau magnétique permanent ayant un axe magnétique aligné avec ledit axe central et une polarité magnétique normale dans un état inactif.

6. Système de serrage magnétique selon la revendication 5, **caractérisé en ce que** l'unité de blocage magnétique comporte également un pôle intérieur cylindrique (124) formé d'un matériau ferromagnétique relié de manière fonctionnelle audit noyau magnétique permanent et espacé radialement vers l'intérieur à partir dudit manchon et un élément de bande (125) entre ledit manchon et ledit pôle intérieur, dans lequel ledit élément de bande est formé d'un matériau magnétique permanent ayant une polarité magnétique transversale audit axe central et aligné magnétiquement avec une polarité magnétique du noyau magnétique permanent.

7. Système de serrage magnétique selon la revendication 6, **caractérisé en ce qu'**un circuit magnétique intérieur est établi à l'état inactif par l'intermédiaire desdits pôles intérieur et extérieur, dudit noyau magnétique permanent et dudit élément de bande, et un circuit magnétique extérieur est établi entre les pôles intérieur et extérieur et la pièce à travailler dans un état actif au moyen de la bobine de solénoïde primaire inversant la polarité de l'aimant réversible.

8. Système de serrage magnétique selon la revendication 6 ou 7, **caractérisé en ce que** la bobine exploratrice entoure la bobine de solénoïde primaire ou le pôle intérieur.

9. Système de serrage magnétique selon au moins une des revendications précédentes 1 à 8, **caractérisé en ce qu'**il inclut au moins une unité supplémentaire de blocage magnétique (110) ou plusieurs unités supplémentaires comportant respectivement des aimants réversibles contribuant à la force de serrage magnétique sur la pièce à travailler.

10. Système de serrage magnétique selon la revendication 9, **caractérisé en ce qu'**au moins une ou plusieurs ou la totalité des unités supplémentaires de blocage magnétique (110) comportent des moyens de détection (26), dans lequel chacun desdits moyens de détection comporte une bobine exploratrice (40) adaptée pour créer un signal de détection indicateur d'un flux magnétique applicable pour déterminer au moins approximativement une force de serrage exercée sur une pièce à travailler (12) à serrer par l'unité de blocage magnétique respective.

11. Système de serrage magnétique selon la revendication 10, **caractérisé en ce qu'**un nombre de tours des bobines exploratrices (40) des moyens de détection des différentes unités de blocage magnétique (110) varie entre les différentes unités de blocage magnétique, dans lequel au moins une bobine exploratrice comporte un nombre de tours plus grand de façon significative que les autres bobines exploratrices respectives.

12. Système de serrage magnétique selon la revendication 10 ou 11, **caractérisé en ce que** les bobines exploratrices (40) des unités de blocage magnétique sont surveillées individuellement, dans lequel les bobines exploratrices sont reliées à des circuits intégrateurs individuels des moyens de calcul et/ou des moyens de commande ou **en ce que** les bobines exploratrices des unités de blocage magnétique (110) sont reliées en série et un signal combiné est surveillé, dans lequel les bobines exploratrices combinées sont reliées à un premier circuit intégrateur, dans lequel au moins une unité de blocage magnétique est surveillée en tant que référence de manière séparée, **en ce qu'**elle est reliée à un second circuit intégrateur.

13. Système de serrage magnétique selon la revendication 12, **caractérisé en ce qu'**un gain du premier circuit intégrateur est différent d'un gain du second circuit intégrateur.

14. Système de serrage magnétique selon au moins une des revendications précédentes 10 à 13, **caractérisé en ce qu'**au moins une des unités de blocage magnétique (110) comportant des moyens de détection peut être désaimantée et aimantée indépendamment des conditions de serrage pour détecter les conditions de serrage, en particulier indépendamment de la force de serrage des unités supplémentaires de blocage magnétique et indépendamment d'un état du circuit magnétique du système de serrage magnétique.

15. Système de serrage magnétique selon au moins une des revendications précédentes 1 à 14, **caractérisé en ce que** la force de serrage est affichée par des moyens d'affichage et/ou la force de serrage est communiquée à un équipement supplémentaire, en particulier une machine à mouler par injection (10), dans lequel une action de l'équipement supplémentaire peut être ajustée à la force de serrage détectée.

16. Système de serrage magnétique selon au moins une des revendications précédentes 1 à 15, **caractérisé en ce que** ladite pièce à travailler (12) est un élément de moule pour une machine à mouler par injection (10) ayant une cavité de moule et lesdits aimants réversibles ayant des bobines exploratrices (40) sont positionnés adjacents à ladite cavité de moule.

17. Système de serrage magnétique selon au moins une des revendications précédentes, **caractérisé en ce que** les mêmes bobines exploratrices (40) sont utilisées respectivement comme premiers et seconds moyens de détermination dans ledit système de détection de perméabilité (28) et dans ledit système de détection de mouvement (27).

18. Procédé pour détecter et pour commander un état de fonctionnement d'un dispositif de serrage magnétique sur une interface de serrage entre une pièce à travailler (12) ou un moule et ledit dispositif de serrage, ledit procédé comportant les étapes consistant à :

   - placer au moins une bobine exploratrice inductive (40) dans ledit dispositif de serrage magnétique (16)
   - détecter une variation de flux magnétique sur ladite interface, entre un état aimanté et un état désaimanté dudit dispositif de serrage magnétique en surveillant une sortie de tension à partir de ladite bobine exploratrice (40) et
   - estimer la force de serrage magnétique sur la base de la variation de la force magnétique sur ladite interface

   **caractérisé en ce qu'**il comporte également les étapes consistant à :

   - détecter des conditions de mouvement de ladite pièce à travailler ou dudit moule par rapport audit dispositif de serrage magnétique sur ladite interface et

- empêcher une opération si des conditions de mouvement excessives sont détectées.

19. Procédé selon la revendication 18, **caractérisé en ce que** des conditions de mouvement entre une pièce à travailler et le dispositif de serrage magnétique (16) sont déterminées sur la base de variations négatives mesurées de flux magnétique, dans lequel une opération est empêchée si des conditions de mouvement excessives sont détectées et/ou des conditions de serrage, en particulier la force de serrage magnétique, sont déterminées sur la base d'une variation totale du flux magnétique à partir de l'état désaimanté à l'état aimanté, dans lequel des opérations sont empêchées de débuter si des conditions de serrage inadaptées sont détectées.

20. Procédé selon la revendication 18 ou 19, **caractérisé en ce que** le flux magnétique est surveillé en continu et la force de serrage magnétique est calculée en continu sur la base du flux magnétique surveillé.

21. Procédé selon au moins une des revendications précédentes 18 à 20, **caractérisé en ce qu'**une température du dispositif de serrage magnétique (16) est mesurée pour calculer automatiquement une variation de la force de serrage résultant d'une variation de la température.

22. Procédé selon au moins une des revendications précédentes 18 à 21, **caractérisé en ce qu'**une sortie de courant d'aimantation supplémentaire est déclenchée pour produire temporairement un champ électromagnétique supplémentaire si un déplacement entre une pièce à travailler et le dispositif de serrage magnétique (16) est détecté.

FIG. 1

FIG. 2

FIG. 3

Fig. 4A

FLUX

ALNICO
FLUX

σ ─────────────────────────────── t

V

SEARCH COIL
VOLTAGE

σ ─────────────────────────────── t

$V_T$

V

MOVEMENT
SENSOR
LOGIC SIGNAL

I

σ ─────────────────────────────── t

$t_M$   $t_S$

EP 1 419 034 B1

FIG. 4B

**FIG. 5**

**FIG. 6**

**FIG. 7**